# EUROPEAN PATENT APPLICATION

(11) **EP 2 565 815 A2**
(43) Date of publication of application: **06.03.2013**
(21) Application number: 12181466.9
(22) Date of filing: 23.08.2012
(51) Int. Cl.: G06F 21/79

(54) **Method of managing memory and image forming apparatus to perform the same**

(30) Priority: 01.09.2011 KR 20110088616
(71) Applicant: Samsung Electronics Co., Ltd., Suwon-si, Gyeonggi-do, 443-742 (KR)
(72) Inventor: Woo, Dae-hong, Gyeonggi-do (KR); Kil, Hyun-sub, Gyeonggi-do (KR)
(74) Representative: Robinson, Ian Michael

(57) **Abstract**

A method of managing memory, the method including extracting location information of erasure data in which file allocation information has been deleted, and performing an overwrite job on the erasure data in a memory, based on the extracted location information.

## Description

### CROSS-REFERENCE TO RELATED APPLICATIONS

This application claims the benefit of Korean Patent Application No. 10-2011-0088616, filed on September 1, 2011, in the Korean Intellectual Property Office.

### BACKGROUND OF THE INVENTION

### 1. Field of the Invention

Features and utilities of the present general inventive concept relate to a method of managing a memory, and an image forming apparatus to perform the same.

### 2. Description of the Related Art

Memory is included in various types of electronic products, e.g., an image forming apparatus. When data is erased from memory included in an electronic product, an overwrite operation is performed on a memory space in which the erased data was stored in order to strengthen security for the electronic product. In this case, the overwrite operation corresponds to overwriting different data to the space in which the erased data was stored.

### SUMMARY OF THE INVENTION

The present general inventive concept provides a method of efficiently managing a memory and an image forming apparatus to perform the method.

The present general inventive concept also provides a non-transitory computer readable recording medium having recorded thereon a computer program to execute the method.

According to the present invention there is provided an apparatus and method as set forth in the appended claims. Additional features and utilities of the present general inventive concept will be set forth in part in the description which follows and, in part, will be obvious from the description, or may be learned by practice of the general inventive concept.

Embodiments of the present general inventive concept provide a method of managing a memory included in an image forming apparatus, the method including upon receiving an erase command to erase data stored in the memory, deleting file allocation table (FAT) information of the data; storing location information of erasure data, wherein the erasure data indicates data, the FAT of which has been deleted; determining whether the memory is in an idle state; if it is determined that the memory is in the idle state, extracting the stored location information of the erasure data; and performing an overwrite job on the only erasure data, based on the extracted location information of the erasure data.

Embodiments of the present general inventive concept also provide a non-transitory computer readable recording medium having recorded thereon a computer program to execute the above methods.

Embodiments of the present general inventive concept also provide an image forming apparatus including a memory, the apparatus including a memory management device for upon receiving an erase command to erase data stored in the memory deleting file allocation table (FAT) information of the data, storing location information of erasure data, and performing an overwrite job on the only erasure data in the memory based on the stored location information of the erasure data, when a predetermined time of performing the overwriting job is occurred, wherein the erasure data indicates data, the FAT of which was deleted.

### BRIEF DESCRIPTION OF THE DRAWINGS

These and/or other features and utilities of the present general inventive concept will become apparent and more readily appreciated from the following description of the embodiments, taken in conjunction with the accompanying drawings of which:

FIG. 1 is a block diagram of a memory management device according to an embodiment of the present general inventive concept;

FIG. 2 is a diagram illustrating a method of performing an overwrite job, performed by an overwrite job performing unit of FIG. 1, according to an embodiment of the present general inventive concept;

FIG. 3 is a block diagram of an apparatus that includes a memory management device, such as that of FIG. 1, according to an embodiment of the present general inventive concept;

FIG. 4 is a location information table according to an embodiment of the present general inventive concept;

FIG. 5 is a location information table according to another embodiment of the present general inventive concept;

FIG. 6 is a location information table according to another embodiment of the present general inventive concept;

FIG. 7 is a block diagram of an image forming apparatus that includes a memory management device, according to an embodiment of the present general inventive concept;

FIG. 8 is a diagram illustrating a method of selecting a technique of performing an overwrite job, according to an embodiment of the present general inventive concept;

FIG. 9 is a diagram illustrating a method of selecting a time of performing an overwrite job, according to an embodiment of the present general inventive concept;

FIG. 10 is a diagram illustrating a method of determining whether to perform the overwrite job, according to an embodiment of the present general inventive concept;

FIG. 11 is a flowchart illustrating a method of managing a memory, according to an embodiment of the present general inventive concept;

FIG. 12 is a flowchart illustrating a method of managing a memory, according to another embodiment of the present general inventive concept;

FIG. 13 is a flowchart illustrating a method of managing a memory, according to another embodiment of the present general inventive concept; and

FIG. 14 is a timing in relation to performing the overwrite job, according to embodiments of the present general inventive concept.

### DETAILED DESCRIPTION OF THE PREFERRED EMBODIMENTS

Reference will now be made in detail to the embodiments of the present general inventive concept, examples of which are illustrated in the accompanying drawings, wherein like reference numerals refer to the like elements throughout. The embodiments are described below in order to explain the present general inventive concept while referring to the figures.

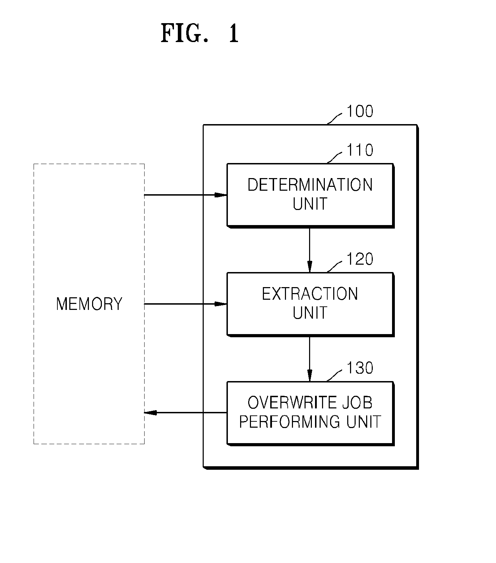

FIG. 1 is a block diagram of a memory management device 100 according to an embodiment of the present general inventive concept. Referring to FIG. 1, the memory management device 100 includes a determination unit 110, an extraction unit 120, and an overwrite job performing unit 130.

For convenience of explanation, FIG. 1 illustrates only some elements of the memory management device 100, which are related to the current embodiment. However, it will be obvious to those of ordinary skill in the art that the memory management device 100 may further include other general elements that are not illustrated in FIG. 1. The determination unit 110, the extraction unit 120, and the overwrite job performing unit 130 according to the current embodiment may correspond to at least one processor, but are not limited thereto.

According to the present embodiment, the memory management device 100 is a device connected to a memory to manage data stored in the memory, but is not limited thereto.

According to the present embodiment, the memory may be non-volatile memory, but is not limited thereto. Examples of non-volatile memory may include a hard disk drive (HDD), flash memory, electrically erasable and programmable read-only memory (EEPROM), read only memory (ROM), and the like.

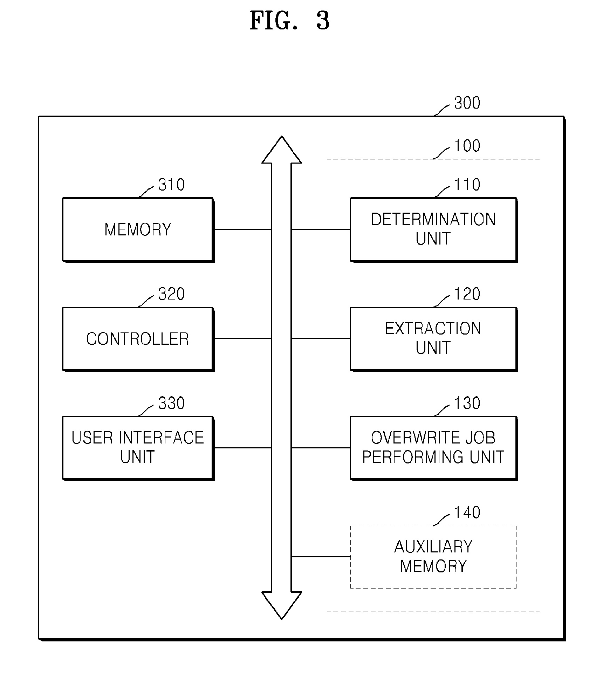

According to the present embodiment, the memory may store location information regarding erasure data. For example, when an erase command to erase data stored in the memory is received, the memory management device 100 deletes file allocation information, i.e., a file allocation table, regarding the erasure data, and stores the location information of the erasure data in the memory. In this case, the erasure data indicates data, the file allocation information of which was deleted according to the erase command. The location information of the erasure data will be described in detail with reference to FIG. 3 below.

The determination unit 110 determines whether the memory is in an idle state. For example, if the memory is in the idle state, it may be understood that the memory is not in use and a read/write operation is thus not performed on the memory, but the present general inventive concept is not limited thereto.

If it is determined that the memory is in the idle state, the extraction unit 120 extracts the location information of the erasure data stored in the memory. In this case, the erasure data corresponds to data from which file allocation information was deleted. Thus, when it is determined that the memory is in the idle state, the extraction unit 120 extracts the location information of the erasure data, the file allocation information of which was deleted.

The file allocation information may be understood as information indicating a location to which a file was allocated. In other words, the file allocation information may include information indicating a location in which a plurality of pieces of data included in the file were stored. For example, the file allocation information may include information regarding locations of sectors or clusters in which the plurality of pieces of data included in the file were stored. Thus, the file allocation information according to the current embodiment may be file allocation table (FAT) information, but is not limited thereto.

According to the present embodiment, the erasure data may correspond to data from which file allocation information was deleted. For example, the erasure data may be data, the FAT information of which was deleted from the memory, in response to an erase command received from a user.

The overwrite job performing unit 130 performs an overwrite job on the erasure data in the memory, based on the location information of the erasure data extracted by the extraction unit 120. For example, the overwrite job may include a data sanitization job, a full data erase job, a data destroy job, or a physical data erase job.

In this case, the overwrite job performing unit 130 performs the overwrite job on only the erasure data from among data stored in the memory, based on the location information of the erasure data extracted by the extraction unit 120. Thus, the overwriting job is performed efficiently.

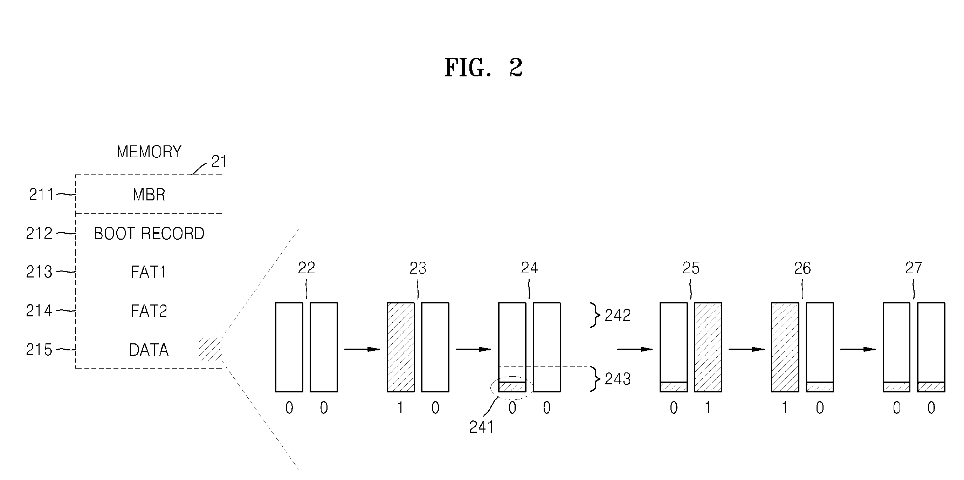

The overwriting job performed by the overwrite job performing unit 130 will be described in detail with reference to FIG. 2 below.

The overwrite job is performed on data that was stored in the memory and then the file allocation information of which was deleted, depending on whether the memory is in the idle state. That is, the memory management device 100 according to the present embodiment performs the overwrite job, which is necessary for device security but takes a large amount of time to perform, when the memory is in the idle state. Accordingly, it is possible to improve both user convenience and device security.

The memory management device 100 according to the present embodiment may be included in various types of apparatuses, including a memory. For example, the memory management device 100 may be included in an image forming apparatus, a general computer system, a universal serial bus (USB) memory device, a memory card, a personal digital assistant (PDA), or the like. An apparatus that includes the memory management device 100 will be described in detail with reference to FIG. 3 below.

FIG. 2 is a diagram illustrating a method of performing an overwrite job, performed by the overwrite job performing unit 130 of FIG. 1, according to an embodiment of the present general inventive concept. For convenience of explanation, FIG. 2 illustrates a file system 21 of a memory according to an embodiment of the present general inventive concept. Referring to FIG. 2, the file system 21 is illustrated as an FAT-32 volume, but the present general inventive concept is not limited thereto.

In the file system 21, a master boot record (MBR) 211 is a system boot sector, a boot record (BR) 212 is a sector to store a command instructing that an operating system (OS) of the memory be installed, an FAT1 213 and an FAT2 214 are sectors to store an FAT providing location information of clusters in which files are stored, and a data sector 215 for storing files and directories.

According to the current embodiment, the overwrite job performing unit 130 performs an overwrite job on erasure data in the memory, based on location information of the erasure data.

In other words, when data is erased from the memory, the FAT stored in the FAT1 213 or the FAT2 214 is first deleted and actual data stored in the data sector 215 may thus remain even after an erase command is received. Also, even if the actual data is deleted from the data sector 215, the actual data may be restored using a voltage of a space in which the actual data was stored. Thus, a security problem may arise. For this reason, the overwrite job performing unit 130 according to the present embodiment performs the overwrite job on the actual data stored in the data sector 215, based on the location information of the erasure data.

For convenience of explanation, the method of FIG. 2 is described with respect to two data writable spaces. However, the overwrite job performing unit 130 according to the present embodiment is not limited thereto, and may perform the overwrite job on a single data writable space, or three or more data spaces.

In operation 22, data writeable spaces exist. In operation 23, for example, '1' and '0' are respectively written to the data writeable spaces. In this case, each value of data written to each of the spaces may be determined using the difference between voltages of the spaces.

In operation 24, although the data written to the data writeable spaces are both changed to '0' by erasing the data from the data writeable spaces, the data writeable space to which '1' was written has a low voltage 241. That is, the erased data may be restored, based on a region 242 recognized as '1' and a region 243 recognized as '0'.

In order to prevent erased data from being restored using a voltage, as described above, the overwrite job performing unit 130 performs the overwrite job on the erasure data. According to the present embodiment, the erasure data may be understood as either data, a corresponding FAT of which was deleted, or data, the corresponding FAT of which was deleted and actual data is then actually deleted.

To perform the overwrite job on the erasure data, the overwrite job performing unit 130 performs the overwrite job by using arbitrary characters, performs the overwrite job by using complements of the arbitrary characters, and performs the overwrite job by again using arbitrary characters. This process is repeatedly performed several times.

For example, the overwrite job performing unit 130 may write arbitrary numbers '0' and `1' to the data writeable spaces (operation 25), write complements of the arbitrary numbers, i.e., '1' and '0', to the data writeable spaces (operation 26), and then write arbitrary numbers '0' and '0' to the data writeable spaces (operation 27). According to the current embodiment, the overwrite job performing unit 130 may repeatedly perform this process several times to prevent erased data from being restored.

While the overwrite job performing unit 130 performs the overwrite job, it occupies resources for performing jobs of an apparatus that includes the memory management device 100. Thus, the other jobs are influenced by the overwrite job. Furthermore, when the overwrite job performing unit 130 performs the overwrite job several times, it takes a large amount of time to complete the overwrite job, depending on the number of times that the overwrite job is performed and memory capacity.

For example, it may take about thirty five seconds to perform the overwrite job on data of 100 Mbytes seven times, and it may take about one hour and twenty five minutes to perform the overwrite job on data of 100 GBytes seven times. Thus, according to the present embodiment, the memory management device 100 performs the overwrite job when a memory is in the idle state, thereby improving user convenience.

FIG. 3 is a block diagram of an apparatus 300 that includes a memory management device 100 of FIG. 1, according to an embodiment of the present general inventive concept. Referring to FIG. 3, the apparatus 300 includes the memory management device 100, a memory 310, a controller 320, and a user interface unit 330. The memory management device 100 includes a determination unit 110, an extraction unit 120, an overwrite job performing unit 130, and an auxiliary memory 140.

For convenience of explanation, FIG. 3 illustrates only some elements of the apparatus 300, which are related to the present embodiment. However, it will be obvious to those of ordinary skill in the art that the apparatus 300 may further include other general elements that are not illustrated in FIG. 3.

The memory management device 100 is an embodiment of the memory management device 100 of FIG. 1, according to the present general inventive concept. Thus, elements of the memory management device 100 are not limited to those of the memory management device 100 illustrated in FIG. 3. Also, the description of the memory management device 100 described above with reference to FIG. 1 may also be applied to the memory management device 100, and will not be described again here.

The apparatus 300 may be an image forming apparatus, a general computer system, a USB memory device, a memory card, a PDA, or the like in which memory 310 may be included, but is not limited thereto.

The memory 310 stores data generated during an operation of the apparatus 300. For example, the memory 310 may be a non-volatile memory, e.g., HDD, flash memory, EEPROM, or ROM.

The memory 310 may further store files, directories, information indicating locations to which the files are allocated, and location information of erasure data. Here, the erasure data may be data which file allocation information is deleted from the memory 310, and the location information of the erasure data may mean location information of a sector or cluster in which the erasure data was stored.

In addition, the memory 310 may further store a location information table that includes the location information of the erasure data.

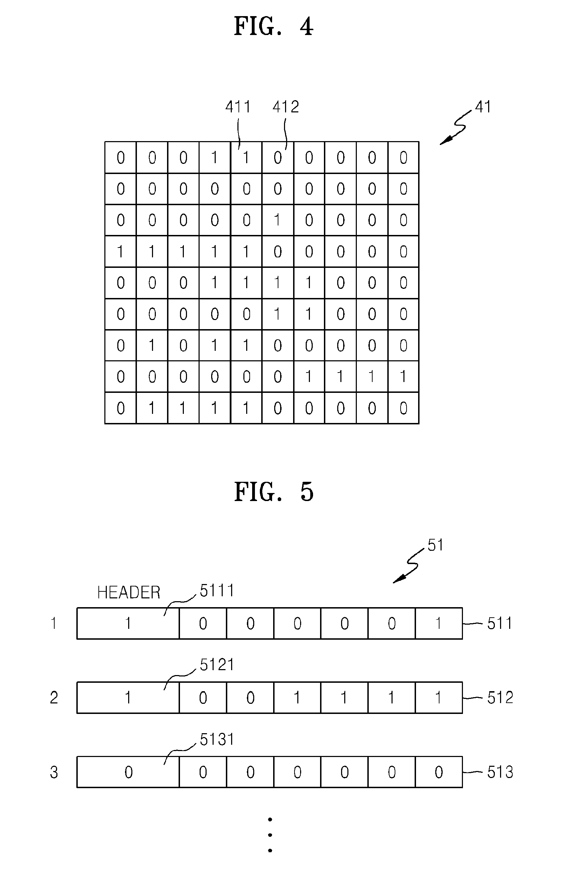

For example, the location information table corresponds to information indicating whether erasure data exists on each of a plurality of sectors or clusters of the memory 310 is implemented in a table form, as will be described with reference to FIG. 4 below.

As another example, the location information table may be implemented in such a manner that the location information table is classified into a plurality of groups according to a location of a sector or cluster and each of the plurality of groups includes a header indicating whether the erasure data exists on each of the groups. In this case, the extraction unit 120 may extract location information of the erasure data, based on information contained in the header, as will be described with reference to FIG. 5 below.

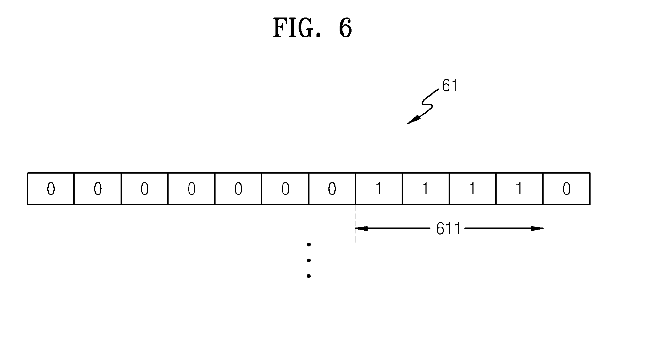

As another example, when a plurality of pieces of erasure data exist in the memory 310, the controller 320 may rearrange the plurality of pieces of erasure data to be consecutively located, and the extraction unit 120 may extract location information of the rearranged erasure data, as will be described with reference to FIG. 6 below.

Alternatively, location information of erasure data and a location information table according to the current embodiment may be stored in the auxiliary memory 140 included in the memory management device 100, rather than in the memory 310. In this case, the auxiliary memory 140 may be a non-volatile memory, such as a HDD, EEPROM, or ROM. If the location information of erasure data and the location information table according to the present embodiment are stored in the memory 310, the auxiliary memory 140 may not be included in the memory management device 100. For convenience of explanation, FIG. 3 illustrates that the auxiliary memory 140 is included in the memory management device 100, but the present general inventive concept is not limited thereto, and the auxiliary memory 140 may not be included in the apparatus 300.

Upon receiving an erase command to erase data stored in the memory 310, the controller 320 deletes file allocation information regarding the data, i.e., an FTA. In this case, the controller 320 stores location information of the erasure data in a location information table included in either the memory 310 or the auxiliary memory 140.

For example, the location information of the erasure data represents a location to which the erased data by the erase command was allocated. Storing the location information of the erasure data in the location information table may mean either writing a sign representing that the erasure data exists to a region corresponding to the location to which the erasure data was allocated of the location information table, or updating the sign representing that the erasure data exists in the region.

Thus, upon receiving an erase command that instructs data be erased from the memory 310, the controller 320 stores location information of the erasure data in the memory 310 or the auxiliary memory 140. Then, the extraction unit 120 may extract the location information of the erasure data stored in the memory 310 or the auxiliary memory 140.

More specifically, when a file is stored in the memory 310, the memory 310 stores data that forms the file and information regarding a location to which the file is allocated, i.e., file allocation information, together. In this case, in order to erase the file or the data from the memory 310, the file allocation information is first deleted.

That is, in order to erase the data from the memory 310 in response to an erase command given from a user, the file allocation information of the data is first erased from the memory 310. Thus, the data may still remain in the space in which the data was stored. When the file allocation information is deleted but the data still remains in the memory 310 as described above, the data may be restored, thereby causing a security problem. Accordingly, the memory management device 100 performs the overwrite job on the memory 310 so as to strengthen device security.

The controller 320 controls overall operations of the apparatus 300. The controller 320 may also control the memory 310 and the memory management device 100.

Also, the controller 320 updates location information of erasure data on which the overwrite job performing unit 130 performs the overwrite job. For example, when the overwrite job is performed on the erasure data, the erasure data is completely erased from the memory 310. The controller 320 updates the location information of the erasure data on which the overwrite job has been performed, and thus, the space in which the completely erased data was stored may be sensed as an empty space.

The user interface unit 330 receives user input from a user and provides output information to the user. The user interface unit 330 may include, but is not limited to, input/output (I/O) devices, such as a display, a touch pad, a keyboard, a monitor, a mouse, and a speaker that are installed in the apparatus 300, and a software module to drive the I/O devices.

The user interface unit 330 displays at least one technique of performing the overwrite job. For example, the user interface unit 330 may display at least one from among a Gutmann (35 pass) technique, a DoD 5220-22M (7 Pass) technique, and a DoD 5220-22M (3 Pass) technique.

A user may select a desired technique from among the at least one technique of performing the overwrite job, via the user interface unit 330. The overwrite job performing unit 130 may perform the overwrite job based on the selected technique. The selecting of a desired technique may be performed during initial user setting, but is not limited thereto and may be performed whenever the overwrite job is performed.

Thus, a user may appropriately select a technique of performing the overwrite job, according to a user environment. For example, the user may select the Gutmann (35 pass) technique to strengthen device security although it takes a relatively large amount of time to perform the overwrite job, or the DoD 5220-22M (3 Pass) technique to perform the overwrite job at high speeds although the degree of device security is lowered. Additionally, the user may determine a number of sectors or clusters on which the overwrite job is to be performed once.

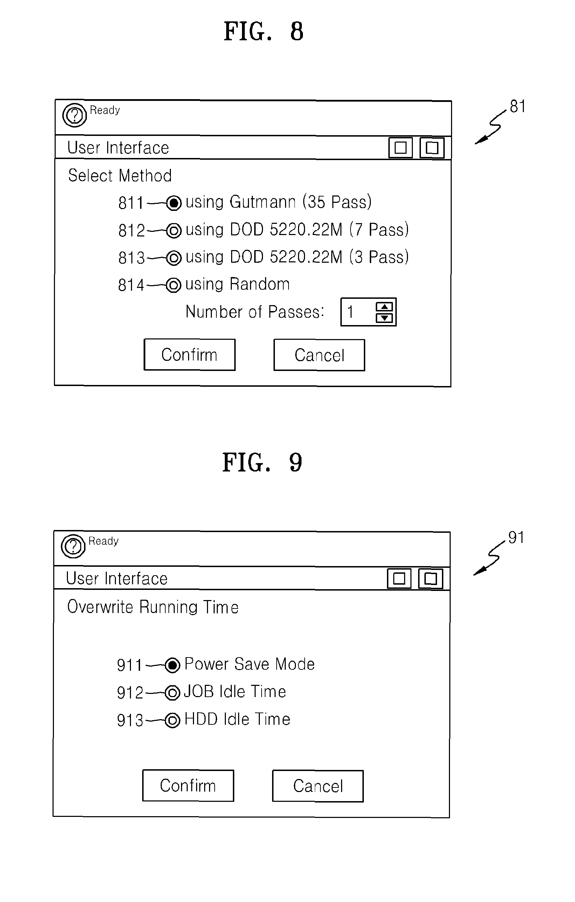

A graphical user interface (GUI) may be used to display various techniques of performing the overwrite job and to select a desired technique from among the various techniques via the user interface unit 330, as will be described with reference to FIG. 8 below.

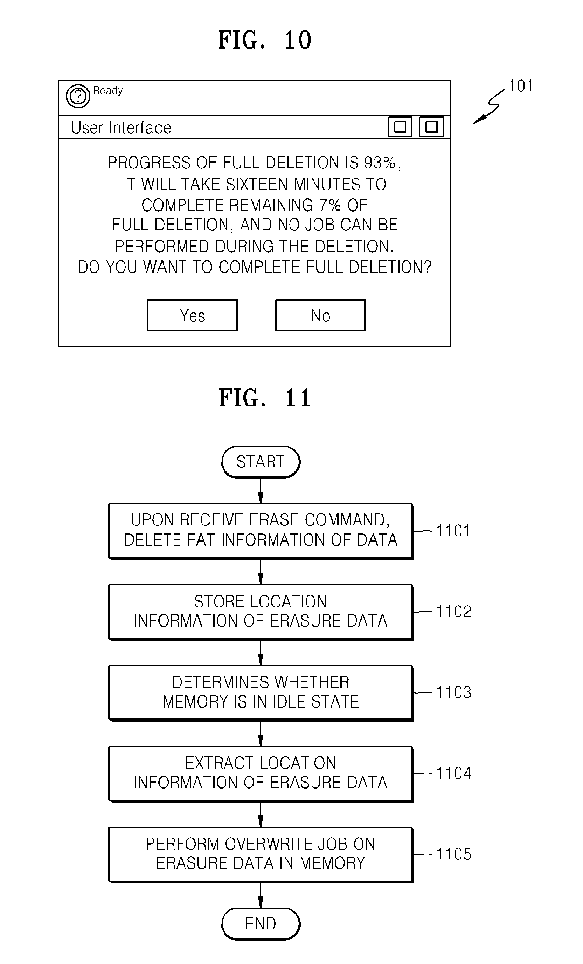

Also, the user interface unit 330 may display a GUI to determine whether the overwrite job is to be performed or display a GUI to determine a time of performing the overwrite job, as will be described with reference to FIGS. 9 and 10 below.

The memory management device 100 extracts location information of erasure data which file allocation information is deleted, depending on whether the memory 310 is in the idle state, and the memory 310 performs the overwrite job on the erasure data.

Thus, the determination unit 110 determines whether the memory 310 is in the idle state, the extraction unit 120 extracts the location information of the erasure data from which file allocation information is deleted, and the overwrite job performing unit 130 performs the overwrite job on the erasure data in the memory 310.

Also, the determination unit 110 determines whether a predetermined job is being performed in the apparatus 300 referring to the controller 320.

If the apparatus 300 is an image forming apparatus, the determination unit 110 determines whether, for example, a printing job, a copying job, a scanning job, an email transmission job, a file transmission job, or a faxing job is being performed in the apparatus 300.

If the apparatus 300 is a general computer system, the determination unit 110 determines whether, for example, a document editing job, an internet searching job, or a video data reproduction job is being performed in the apparatus 300.

If the apparatus 300 is a PDA, the determination unit 110 determines whether, for example, a video data reproduction job, a document reproduction job, or an audio reproduction job is being performed in the apparatus 300.

If the determination unit 110 determines that no job is being performed in the apparatus 300, then the extraction unit 120 extracts location information of erasure data and the overwrite job performing unit 130 performs the overwrite job on the erasure data in the memory 310, based on the extracted location information of erasure data.

Thus, while the apparatus 300 is not performing any job, the memory management device 100 performs the overwrite job on the memory 310, thereby strengthening device security for the apparatus 300 and improving user convenience.

Also, the determination unit 110 determines whether the apparatus 300 is in a power save mode referring to the controller 320. Here, the power save mode means a state that guarantees only a minimum number of operations of the apparatus 300 to save power when the apparatus 300 is in a standby mode even after a predetermined time period.

If the determination unit 110 determines that the apparatus 300 is in the power save mode, then the extraction unit 120 extracts location information of erasure data and the overwrite job performing unit 130 performs the overwrite job on the erasure data in the memory 310, based on the extracted location information of erasure data.

However, according to a user environment, power may not be supplied to the memory 310 when the apparatus 300 is in the power save mode. In this case, if the determination unit 110 determines that the apparatus 300 is in the power save mode and the extraction unit 120 extracts location information of the erasure data, then the controller 320 controls power to be supplied to the memory 310. For example, when the apparatus 300 is in the power save mode, the controller 320 may be implemented in the form of a kernel.

Thus, when the controller 320 controls power to be supplied to the memory 310, the overwrite job performing unit 130 performs the overwrite job on the erasure data in the memory 310 to which power is supplied under control of the controller 320, based on the extracted location information of erasure data.

When the overwrite job completes, the controller 320 cuts off the power supplied to the memory 310. Thus, the memory management device 100 may control the apparatus 300 to be in the power save mode again after the overwrite job completes.

As described above, the memory management device 100 performs the overwrite job on the memory 310 when the apparatus 300 is in the power save mode, thereby strengthening device security for the apparatus 300 and improving user convenience.

FIG. 4 is a location information table 41 according to an embodiment of the present general inventive concept. Referring to FIGS. 3 and 4, the location information table 41 corresponds to information representing whether erasure data exists on each of a plurality of sectors of the memory 310 and is implemented in a table form. The location information table 41 may have the same size as an FAT.

In the location information table 41, regions to which '0' or '1' is written respectively denote locations of the plurality of sectors of the memory 310. For example, a region 411 to which '1' is written denotes that erasure data exists on a sector corresponding to the location denoted by the region 411, and a region 412 to which '0' is written denotes that erasure data does not exist on a sector corresponding to the location denoted by the region 412.

More specifically, the sector corresponding to the location denoted by the region 411 to which '1' is written may be a 'dirty' sector in which erasure data exists, and the sector corresponding to the location denoted by the region 412 to which '0' is written may be a 'clean' sector in which erasure data does not exist.

The location information table 41 may be stored in the memory 310 or the auxiliary memory 140. The extraction unit 120 may extract location information of erasure data, based on the stored location information table 41.

The controller 320 updates location information of erasure data on which the overwrite job performing unit 130 performs the overwrite job. For example, when the overwrite job is performed on the sector corresponding to the location denoted by the region 411 to which '1' is written, the controller 320 may update the location information of the erasure data by writing '0' to the region 411.

For convenience of explanation, FIG. 4 illustrates a case where the location information table 41 is implemented in units of the sectors of the memory 310, but the present general inventive concept is not limited thereto, and the location information table 41 may be implemented in units of clusters of the memory 310.

FIG. 5 is a location information table 51 according to another embodiment of the present general inventive concept. The location information table 51 will now be described with respect to FIGS. 3 to 5. The location information table 51 is classified into a plurality of groups 511, 512, 513, ... according to a sector location, and each of the plurality of groups 511, 512, 513, ... includes a header indicating whether erasure data exists on each of the plurality of groups.

For example, the location information table 51 may be classified into the first to third groups 511 to 513 according to sector location. In this case, adjacent sectors of the memory 310 may be classified to the same group, but are not limited thereto.

Referring to FIG. 5, erasure data exists on sectors corresponding to the first and second groups 511 and 512, but erasure data does not exist on sectors corresponding to the third group 513. Thus, '1' may be written to a first header 5111 of the first group 511 and a second header 5121 of the second group 512 in order to indicate that erasure data exists, and '0' may be written to a third header 5131 of the third group 513 in order to indicate that erasure data does not exist. As described above, labeling is performed to write '0' or '1'to the first to third headers 5111, 5121, and 5131, and the extraction unit 120 may thus easily extract location information of erasure data.

For convenience of explanation, FIG. 5 illustrates a case where the location information table 51 is implemented in units of the sectors of the memory 310, but the present general inventive concept is not limited thereto and the location information table 51 may be implemented in units of clusters of the memory 310.

FIG. 6 is a location information table 61 according to another embodiment of the present general inventive concept. The location information table 61 will now be described with reference to FIGS. 3, 4, and 6.

For example, if a plurality of pieces of erasure data exist in the memory 310, the controller 320 may rearrange the plurality of pieces of erasure data to be consecutively located.

Referring to FIG. 6, the location information table 61 shows the location information of the plurality of pieces of erasure data rearranged by the controller 320. As illustrated in FIG. 6, a region 611 in which a plurality of pieces of erasure data are consecutively located exists, owing to the rearranging of the controller 320. For example, the rearranging performed by the controller 320 may be performed by a disc defragmenter and thus, may be a defragmentation job, but is not limited thereto.

Thus, the extraction unit 120 may extract the location information of the plurality of pieces of erasure data rearranged by the controller 320. Since the plurality of pieces of erasure data are consecutively located in the extracted location information of erasure data, it is possible to improve efficiencies of an extracting job performed by the extraction unit 120 and an overwrite job performed by the overwrite job performing unit 130.

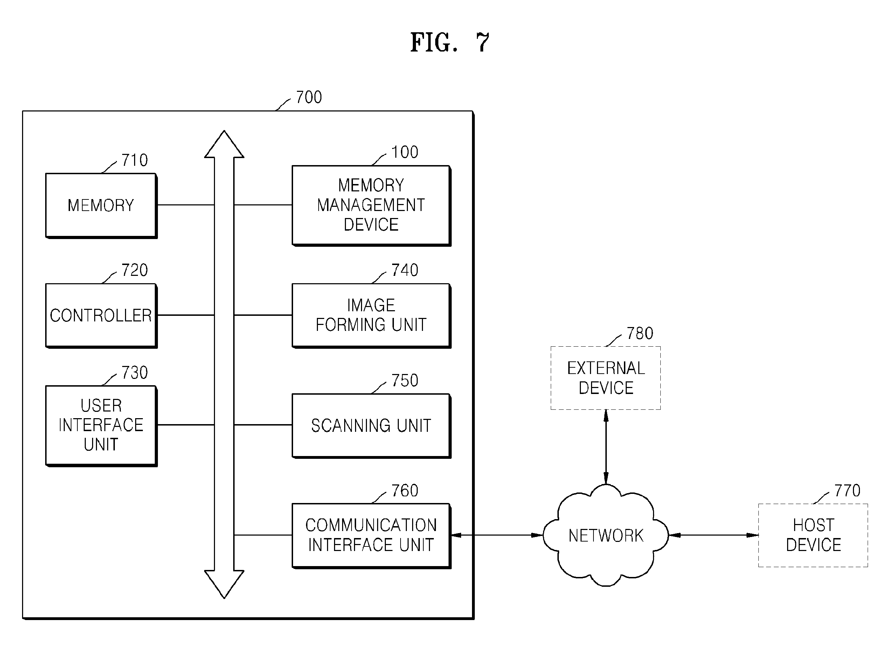

FIG. 7 is a block diagram of an image forming apparatus 700 that includes a memory management device 100, according to an embodiment of the present general inventive concept. Referring to FIG. 7, the image forming apparatus 700 includes the memory management device 100, a memory 710, a controller 720, a user interface unit 730, an image forming unit 740, a scanning unit 750, and a communication interface unit 760.

For convenience of explanation, FIG. 7 illustrates only some elements of the image forming apparatus 700, which are related to the current embodiment. However, it will be obvious to those of ordinary skill in the art that the image forming apparatus 700 may further include other general elements that are not illustrated in FIG. 7.

The memory management device 100 may correspond to the memory management device 100 of FIG. 1 or FIG. 3. The image forming apparatus 700 is an embodiment of the apparatus 300 of FIG. 3, according to an embodiment of the present general inventive concept. Thus, the above descriptions regarding FIGS. 1 and 3 may also be applied to the memory management device 100 and the image forming apparatus 700 of FIG. 7, and will not be described again here.

The image forming apparatus 700 is an apparatus to form an image, such as a printer, a scanner, and an MFP device. Thus, the image forming apparatus 700 is capable of performing at least one from among a scanning job, a print job, a copying job, a faxing job, an email transmission job, and a job of transmitting a file to a server, under control of a host device 770.

According to an embodiment of the present general inventive concept, the image forming apparatus 700, the host device 770, and an external device 780 may exchange data with one another by using communication modules thereof, via a wired/wireless network or a wired serial communication network. Here, examples of these networks include Internet, a Local Area Network (LAN), a wireless LAN, a wide area network (WAN), a personal area network (PAN), and the like, but are not limited thereto and any of the other networks via which information may be exchanged may be employed.

The host device 770 controls the image forming apparatus 700, and may be any of various devices, e.g., a general computer system and a PDA, which may be connected to the image forming apparatus 700 to control the image forming apparatus 700.

Examples of the external device 780 include various devices that may be connected to the image forming apparatus 700 and the host device 770 via a wired/wireless network or a wired serial communication network. Examples of the external device 780 include not only a USB memory and a fax machine, but also a general computer system, a server device, a digital living network alliance (DLNA) device, and a web server that are present in a network.

The image forming apparatus 700 includes the memory 710 having a large capacity to perform various jobs independently or together with the host device 770 and the external device 780.

According to the present embodiment, upon receiving an erase command to erase data stored in the memory 710, the memory management device 100 deletes FAT information of the data, stores location information of the erasure data, and performs the overwrite job on only the erasure data in the memory 710 based on the stored location information of erasure data, when a predetermined time of performing the overwriting job has occurred. Here, the erasure data indicates data which FAT information was deleted.

For example, the predetermined time of performing the overwriting job may include at least one from among when the memory 710 is in the idle state, when the image forming apparatus 700 is not performing any job, and when the image forming apparatus 700 is in the power save mode. When the image forming apparatus 700 is not performing any job refers to a time when the image forming apparatus 700 is in a standby mode, but is not limited thereto, and may also include when the image forming apparatus 700 is in the power save mode.

Also, the memory management device 100 may perform the overwrite job on the erasure data in the memory 710 according to a predetermined technique of performing the overwrite job.

A time of performing the overwrite job and a technique of performing the overwrite job may be set by a user through the user interface unit 730 of the image forming apparatus 700, but are not limited thereto, and may be predetermined.

The memory management device 100 may perform the data sanitization job, the full data erase job, the data destroy job or the physical data erase job on the memory 710 of the image forming apparatus 700 while the image forming apparatus 700 is in the idle time, thereby improving user convenience and strengthening security for the image forming apparatus 700.

The controller 720 controls overall operations of the image forming apparatus 700. The user interface unit 730 receives user input from a user and provides output information to the user. The communication interface unit 760 exchanges data with the host device 770 and the external device 780.

The image forming unit 740 forms an image to perform a print job of printing print data on a printing medium, such as, for example, paper. According to the present embodiment, the image forming unit 740 includes all hardware units to perform charging, exposure, development, transfer, and fixing to perform a print job, and software modules to drive the hardware units.

The scanning unit 750 performs a scanning job of scanning document to obtain image data. According to the current embodiment, the scanning unit 750 includes all hardware units for performing the scanning job, e.g., a light-emitting device and an image sensor, and software modules for driving the hardware units.

As described above, the image forming apparatus 700 performs the overwrite job on erasure data while the memory 710 or the image forming apparatus 700 is in the idle state. Accordingly, it is possible to strengthen security for the image forming apparatus 700 while reducing a time needed to strengthen the security.

FIGS. 8 to 10 illustrate various GUIs via to obtain selection information regarding various functions from a user, according to embodiments of the present general inventive concept. The GUIs illustrated in FIGS. 8 to 10 may be displayed on the user interface unit 330 of the apparatus 300 illustrated in FIG. 3 or the user interface unit 730 of the apparatus 700 illustrated in FIG. 7, but are not limited thereto, and may be displayed in a web UI form on a user interface unit (not shown) of the host device 100. Thus, a user may select one of a plurality of options related to various functions.

FIG. 8 is a diagram illustrating a method of selecting a technique of performing the overwrite job, according to an embodiment of the present general inventive concept. Referring to FIG. 8, a user, via a GUI 81, may select at least one from among an item 811 of performing the overwrite job thirty-five times by using the Gutmann technique, an item 812 of performing the overwrite job seven times by using the DoD 5220.22M technique, an item 813 of performing the overwrite job three times by using the DoD 5220.22M technique, and an item 814 of performing the overwrite job a number of times set by a user by using a random technique.

Thus, the user may control the degree of device security according to a user environment. In other words, the number of times that the overwrite job is to be performed may be increased although it takes a large amount of time when a high degree of device security is required, and may be reduced when a relatively low degree of device security is required and when real time usage environment should be guaranteed.

FIG. 9 is a diagram illustrating a method of selecting a time to perform an overwrite job, according to an embodiment of the present general inventive concept. Referring to FIG. 9, a user, via a GUI 91, may select at least one from among an item 911 of performing the overwrite job in the power save mode, an item 912 of performing the overwrite job in a job idle state, and an item 913 of performing the overwrite job in a HDD idle state.

The power save mode means that the apparatus 300 of FIG. 3 or the image forming apparatus 700 of FIG. 7 is in the power save mode. The job idle time state means that the apparatus 300 or the image forming apparatus 700 is not performing any job. The HDD idle time state means that the memory 310 of the apparatus 300 or the memory 710 of the image forming apparatus 700 is in the idle state.

Accordingly, a user may appropriately select a time to perform the overwrite job, according to a user environment.

FIG. 10 is a diagram illustrating a method of determining whether to perform the overwrite job, according to an embodiment of the present general inventive concept. Referring to FIG. 10, the memory management device 100 illustrated in FIG. 1 or 3 may display a message informing a user of a time required to perform the overwrite job and the user may select whether to perform the overwrite job, via a GUI 101.

More specifically, it is possible, via the GUI 101, to provide a user with a message saying "The progress of full deletion is 93%, it will take sixteen minutes to complete the remaining 7% of the deletion, and you cannot perform any job during the deletion. Do you want to complete full deletion?" Here, the full deletion means the overwrite job according to an embodiment of the present general inventive concept.

In other words, it is possible to provide a user with information, via the GUI 101, that 93% of the overwrite job performed on the memory 310 of the apparatus 300 of FIG. 3 (or the memory 710 of the image forming apparatus 700 of FIG. 7) is completed and the remaining 7% of the overwrite job should be completed, and it will take about sixteen minutes to complete the overwrite job.

Since the overwrite job is assigned higher priority than the other jobs, any job cannot be performed using the memory 310 of the apparatus 300 or the memory 710 of the image forming apparatus 700 while the overwrite job is being performed.

Accordingly, the memory management device 100 may allow a user to select whether to perform the overwrite job, via the GUI 101, thereby improving user convenience.

FIGS. 11 to 13 are flowcharts illustrating methods of managing a memory, according to various embodiments of the present general inventive concept. Operations included in each of the methods of FIGS. 11 to 13 are performed in a sequential manner by the memory management device 100 of FIG. 1, the apparatus 300 of FIG. 3, and the image forming apparatus 700 of FIG. 7. Thus, although not described below, the above descriptions of the memory management device 100, the apparatus 300, and the image forming apparatus 700 may also be applied to the methods of FIGS. 11 to 13.

FIG. 11 is a flowchart illustrating a method of managing a memory for an image forming apparatus, according to an embodiment of the present general inventive concept.

In operation 1101, when an erase command to erase data stored in a memory is received, the memory management device 100 deletes FAT information of the data.

In operation 1102, the memory stores location information of erasure data. Here, the erasure data indicates data, the FAT of which was deleted. Also, the erasure data indicates data in which the FAT has been deleted.

In operation 1103, the determination unit 110 determines whether the memory is in the idle state.

In operation 1104, if it is determined in operation 1103 that the memory is in the idle state, the extraction unit 120 extracts the location information of erasure data stored in operation 1102.

In operation 1105, the overwrite job performing unit 130 performs the overwrite job on the only erasure data in the memory, based on the location information of erasure data extracted in operation 1103.

According to this method, the overwrite job is performed while the memory is in the idle state. Accordingly, it is possible to perform various jobs without being interrupted by the overwrite job performed on the memory.

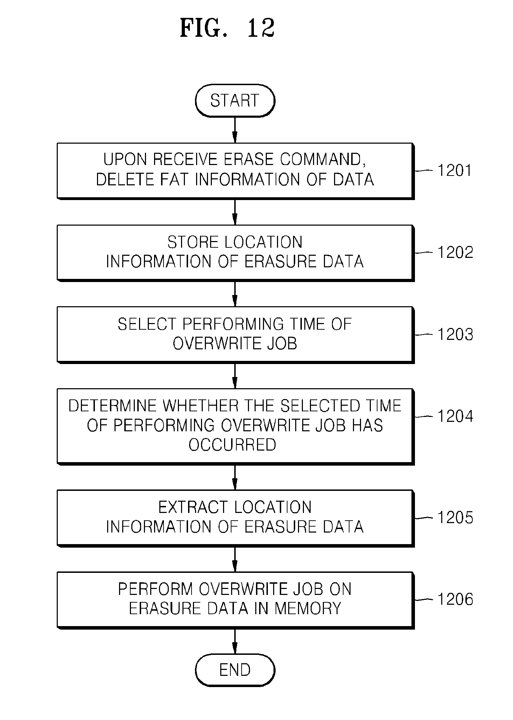

FIG. 12 is a flowchart illustrating a method of managing a memory, according to another embodiment of the present general inventive concept.

In operation 1201, when an erase command to erase data stored in a memory is received, the controller 320 of the apparatus 300 of FIG. 3 or the controller 720 of the image forming apparatus 700 of FIG. 7 deletes FAT information of the data.

In operation 1202, the controller 320 or the controller 720 stores location information of the erasure data. Here, the erasure data indicates data, the FAT of which was deleted.

In operation 1203, the user interface unit 330 of the apparatus 300 or the user interface unit 730 of the image forming apparatus 700 receives selection information to select a time of performing the overwriting job from a user. Alternatively, the selection information may be received via the host device 770 to control the image forming apparatus 700.

In operation 1204, the determination unit 110 determines whether a selected time of performing the overwrite job has occurred, based on the selection information received in operation 1203.

In operation 1205, if it is determined in operation 1204 that a selected time of performing an overwrite job has occurred, then the extraction unit 120 extracts the location information of erasure data stored in operation 1202.

In operation 1206, the overwrite job performing unit 130 performs the overwrite job on the erasure data in the memory, based on the extracted location information of erasure data extracted in operation 1205.

Accordingly, the overwrite job may be performed at a time of performing the overwriting job selected by a user, thereby improving user convenience and strengthening device security.

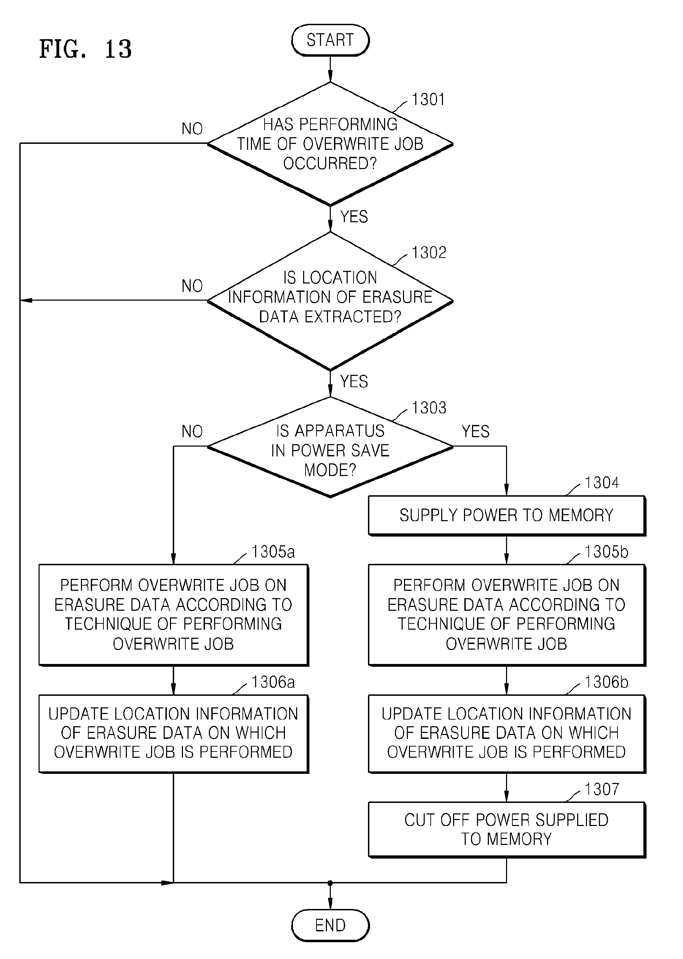

FIG. 13 is a flowchart illustrating a method of managing a memory, according to another embodiment of the present general inventive concept.

Referring to FIGS. 3, 7 and 13, in operation 1301, the determination unit 110 determines whether a time of performing the overwrite job has occurred. A time of performing the overwrite job may be determined based on selection information received from a user or may be a predetermined set time. If the determination unit 110 determines that the time of performing the overwrite job has occurred (either a selected time or a predetermined time), the method proceeds to operation 1302.

If the determination unit 110 determines that the time of performing the overwrite job has not occurred, the method ends. However, according to another embodiment of the present general inventive concept, the determination unit 110 may monitor whether the time of performing the overwrite job has occurred, even after the method ends. In other words, the method of FIG. 13 may be repeatedly performed.

In operation 1302, the extraction unit 120 extracts location information of erasure data from which file allocation information is deleted. If the location information of erasure data is successfully extracted, the method proceeds to operation 1303.

If the extraction unit 120 fails to extract the location information of erasure data, then it is determined that erasure data does not exist on the memory 310 or 710, and thus the method ends.

In operation 1303, the determination unit 110 determines whether the apparatus 300 or the image forming apparatus 700 is in the power save mode.

For example, when the apparatus 300 or the image forming apparatus 700 is determined to be in the power save mode, no power may be supplied to the memory 310 or 710. Thus, in order to perform the overwrite job, the controller 320 or 720 determines whether the apparatus 300 or the image forming apparatus 700 is in the power save mode.

If it is determined that the apparatus 300 or the image forming apparatus 700 is not in the power save mode, the method proceeds to operation 1305a. If it is determined that the apparatus 300 or the image forming apparatus 700 is in the power save mode, the method proceeds to operation 1304.

In operation 1304, the controller 320 or 720 supplies power to the memory 310 or 710. In this case, when the apparatus 300 or the image forming apparatus 700 is in the power save mode, the controller 320 may be implemented in the form of a kernel.

In operations 1305a and 1305b, the overwrite job performing unit 130 performs the overwrite job on the erasure data in the memory 310 or 710 according to a technique of performing the overwrite job, based on the location information of erasure data extracted in operation 1302. The technique of performing the overwrite job may be determined based on the selection information received from the user or may be predetermined.

In operations 1306a and 1306b, the controller 320 or 720 updates the location information of the erasure data on which the overwrite job is performed. For example, the controller 320 or 720 updates the location information of the erasure data to indicate that the erasure data is completely erased.

In operation 1307, the controller 320 or 720 cuts off the power supplied to the memory 310 or 710. In other words, if the apparatus 300 or the image forming apparatus 700 has entered the power save mode before the overwrite job is performed, the controller 320 or 720 powers off the memory 310 or 710 to maintain the apparatus 300 or the image forming apparatus 700 in the power save mode.

According to the present embodiment, it is possible to manage a memory according to a predetermined technique of performing the overwrite job, at a predetermined time of performing the overwriting job.

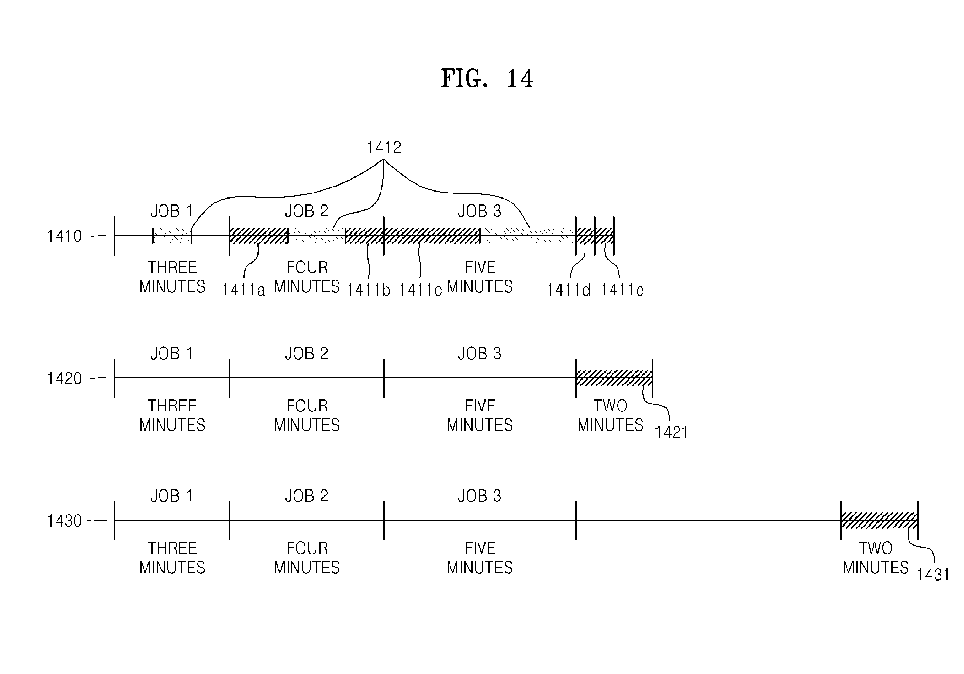

FIG. 14 is a timing diagram in relation to performing the overwrite job, according to embodiments of the present general inventive concept. Referring to FIG. 14, a first job JOB1, a second job JOB2, and a third job JOB3 are sequentially performed, but the present general inventive concept is not limited thereto. It is hereinafter assumed that it takes three minutes to perform the first job JOB1, it takes four minutes to perform the second job JOB2, it takes five minutes to perform the third job JOB3, and it takes two minutes to perform the overwrite job on data obtained when the first to third jobs JOB1, JOB2, and JOB3 are performed.

Referring to FIGS. 1 and 14, a first timing diagram 1410 illustrates a time of performing an overwrite job corresponding to when a memory is in the idle state. In the first timing diagram 1410, reference numeral '1412' denotes sections in which the memory is used during the performing of the first to third jobs JOB1, JOB2, and JOB3. For example, the sections in which the memory is used may be understood as sections in which data is written to the memory, but are not limited thereto.

The overwrite job may be performed on data obtained according to the first job JOB1, in sections 1411a to 1411e in which the memory is in the idle state, after the first job JOB1 ends. Similarly, the overwrite job may be performed on data obtained according to the second job JOB2, in the sections 1411c to 1411e in which the memory is in the idle state after the second job JOB2 ends. The overwrite job may be performed on data obtained according to the third job JOB3, in the sections 1411d to 1411e in which the memory is in the idle state after the third job JOB3 ends.

Here, the total duration of the sections 1411a to 1411e in which the memory is in the idle state may be two minutes.

A second timing diagram 1420 illustrates a time of performing the overwrite job corresponding to when an apparatus that includes the memory management device 100 is not in use. Referring to the second timing diagram 1420, after all of the first to third jobs JOB1, JOB2, and JOB3 end, the overwrite job is performed in a section 1421 in which no job is performed in an apparatus that includes the memory management device 100. The duration of the section 1421 may be two minutes.

A third timing diagram 1430 illustrates a time of performing of the overwrite job corresponds to when an apparatus that includes the memory management device 100 is in the power save mode. Referring to the third timing diagram 1430, after all of the first to third jobs JOB1, JOB2, and JOB3 end, the overwrite job is performed in a section 1431 in which an apparatus that includes the memory management device 100 is in the power save mode. The duration of the section 1431 may be two minutes.

Referring to the first to third timing diagrams 1410 to 1430, a point of time when the first to third jobs JOB1, JOB2, and JOB3 end is the same. Thus, the memory management device 100 according to the present embodiment may perform the overwrite job while not interrupting a job performed by a user.

According to the above embodiments, the overwrite job may be efficiently performed on a memory, thereby improving user convenience and strengthening device security.

Also, it is possible to perform a desired job without being interrupted by the overwrite job performed on a memory. Thus, user convenience may be improved when memory management is performed to strengthen device security.

The above methods according to the present general inventive concept can also be embodied as computer-readable codes on a computer-readable recording medium. The computer-readable recording medium is any data storage device that can store data which can be thereafter read by a computer system. Examples of the computer-readable recording media include read-only memory (ROM), random-access memory (RAM), CD-ROMs, magnetic tapes, floppy disks, optical data storage devices, and carrier waves (such as data transmission through the Internet). The computer-readable recording medium can also be distributed over network-coupled computer systems so that the computer-readable code is stored and executed in a distributed fashion. Also, functional programs, codes, and code segments to accomplish the present general inventive concept can be easily construed by programmers skilled in the art to which the present general inventive concept pertains.

Although a few preferred embodiments have been shown and described, it will be appreciated by those skilled in the art that various changes and modifications might be made without departing from the scope of the invention, as defined in the appended claims.

## Claims

1. A method of managing a memory included in an image forming apparatus, the method comprising:
upon receiving an erase command to erase data stored in the memory, deleting file allocation table (FAT) information of the data;
storing location information of erasure data, wherein the erasure data indicates data, the FAT of which has been deleted;
determining whether the memory is in an idle state;
if it is determined that the memory is in the idle state, extracting the stored location information of the erasure data; and
performing an overwrite job on only the erasure data, based on the extracted location information of the erasure data.

2. The method of claim 1, further comprising:
updating the location information of the erasure data on which the overwrite job is performed.

3. The method of claim 1, wherein the extracting of the stored location information comprises extracting the location information of the erasure data from a location information table in which information indicating whether erasure data exists on each of a plurality of sectors or clusters of the memory is implemented in a table form.

4. The method of claim 3, wherein the location information table is implemented in such a manner that the location information table is classified into a plurality of groups according to a sector location or a cluster location and each of the plurality of groups includes a header indicating whether the erasure data exists on each of the groups.

5. The method of claim 4, wherein the extracting of the stored location information comprises extracting the location information of the erasure data, based on the header.

6. The method of claim 1, further comprising:
if a plurality of pieces of erasure data exist in the memory, rearranging the plurality of pieces of erasure data to be consecutively located; and
extracting location information of the rearranged erasure data.

7. The method of claim 1, further comprising:
determining whether a job is being performed in the image forming apparatus; and
if it is determined that the job is not being performed in the image forming apparatus, performing the overwrite job on the erasure data in the memory by extracting the stored location information of the erasure data.

8. The method of claim 1, further comprising:
determining whether the image forming apparatus is in a power save mode;
if it is determined that the image forming apparatus is in the power save mode, extracting the stored location information of the erasure data; and
performing the overwrite job on the erasure data in the memory, based on the extracted location information of the erasure data.

9. The method of claim 8, further comprising:
supplying power to the memory when the location information of the erasure data is extracted; and
cutting off power supplied to the memory when the performing of the overwrite job on the erasure data ends.

10. The method of claim 1, further comprising:
displaying at least one technique of performing the overwrite job; and
performing the overwrite job according to a technique selected by a user from among the at least one displayed technique.

11. A non-transitory computer readable recording medium having recorded thereon a computer program to execute the method of any of claims 1 through 10.

12. An image forming apparatus including a memory, the apparatus comprising:
a memory management device for, upon receiving an erase command to erase data stored in the memory deleting file allocation table (FAT) information of the data, storing location information of erasure data, and performing an overwrite job on only the erasure data in the memory based on the stored location information of the erasure data, when a predetermined time of performing the overwriting job has occurred, wherein the erasure data indicates data, the FAT of which was deleted.

13. The image forming apparatus of claim 12, wherein the predetermined time of performing the overwriting job includes at least one from among when the memory is in an idle state, when the image forming apparatus does not perform any job, and when the image forming apparatus is in a power save mode.

14. The image forming apparatus of claim 12, wherein the predetermined time of performing the overwriting job indicates a time of performing the overwriting job selected by a user from among at least one of time of performing overwriting job displayed on the image forming apparatus.

15. The image forming apparatus of claim 12, wherein the memory management device receives selection information to select a performing technique to perform the overwrite job, from the user, the performing of the overwrite job comprises performing the overwrite job by using the selected performing technique according to the received selection information.
